# EUROPÄISCHE PATENTSCHRIFT

(11) **EP 0 301 384 B1**
(45) Veröffentlichungstag und Bekanntmachung des Hinweises auf die Patenterteilung: **21.09.1994**
(21) Anmeldenummer: 88111621.4
(22) Anmeldetag: 19.07.1988
(51) Int. Cl.: G06K 9/32, G06K 9/42

(54) **Schaltungsanordnung zur Aufbereitung von schrägstehenden, insbesondere handgeschriebenen Zeichen**
Circuit arrangement for processing slanting, in particular hand-written characters
Circuit pour le prétraitement de caractères inclinés, en particulier de caractères manuscrits

(30) Priorität: 30.07.1987 DE 3725354
(43) Veröffentlichungstag der Anmeldung: 01.02.1989
(73) Patentinhaber: COMPUTER GESELLSCHAFT KONSTANZ MBH, 78467 Konstanz (DE)
(72) Erfinder: Langfeldt, Folkhart, Ing.-grad., D-7750 Konstanz (DE); Kochert, Wilfried, Dipl.-Ing. (FH), D-7750 Konstanz (DE)
(74) Vertreter: Fuchs, Franz-Josef, Dr.-Ing.

(56) Entgegenhaltungen:
- EP-A- 0 176 910
- PATENT ABSTRACTS OF JAPAN vol. 10, no. 374 (P-527)(2431) 12 Dezember 1986,& JP-A-61 168080 (RICOH CO. LTD.) 29 Juli 1986,
- PATENT ABSTRACTS OF JAPAN vol. 4, no. 62 (P-10)(544) 17 Mai 1980,& JP-A-55 33254 (FUJITSU K.K.) 08 März 1980,
- PATENT ABSTRACTS OF JAPAN vol. 4, no. 74 (P-13)(556) 30 Mai 1980,& JP-A-55 41512 (HITACHI SEISAKUSHO K.K.) 24 März 1980,

## Beschreibung

Die Erfindung betrifft ein Verfahren und eine Schaltungsanordnung zur Aufbereitung von schrägstehenden, insbesondere handgeschriebenen Zeichen.

Die bei der maschinellen Zeichenerkennung eingesetzten Klassifikatoren liefern im allgemeinen nur dann befriedigende Ergebnisse, wenn die zu erkennenden Zeichen in Form und Größe bestimmten Mindestanforderungen genügen. Die Zeichen dürfen dabei nicht zur breit und nicht zu hoch sein, weil sie sonst nicht in das vorgegebene Abtastfenster passen. Außerdem dürfen die Zeichen nicht zu schräg stehen, weil der Klassifikator unter Umständen durch Zeichenbestandteile aus angrenzenden Nachbarzeichen gestört wird. Die Einhaltung dieser Forderungen bereitet insbesondere bei handgeschriebenen Zeichen erhebliche Probleme, weil hier aufgrund des unterschiedlichen Schreibverhaltens sowohl nach links als auch nach rechts geneigte Zeichen mit zum Teil sehr unterschiedlicher Zeichenschräge erkannt werden müßen.

Aus JP-A-61 168080 (Ricoh) ist ein Verfahren der eingangs genannten Art bekannt, bei dem, ausgehend von einer "Normalabtastung" unter einem Winkel von 0°, wenigstens drei weitere Abtastbilder unter -15°, -30°, und -40° erzeugt und die dazugehörigen senkrechten Zeichenschatten gebildet werden. Anschließend werden die Schatten der vier Abtastbilder untereinander verglichen und das Abtastbild mit der geringsten Schattenbreite ausgewählt. Dieses Verfahren benötigt viele Vergleichsschritte und ist nur geeignet, um Schräglagen in einer Richtung, z.B. nach rechts geneigte Zeichen, zu korrigieren.

Der vorliegenden Erfindung liegt deshalb die Aufgabe zugrunde, ein Verfahren und eine Schaltungsanordnung zur automatisierten Zeichenerkennung so zu verbessern, daß auch bei schrägstehenden Zeichen, zum Beispiel Kursivschrift oder Handblockschrift mit unterschiedlicher Zeichenschräge eine hohe Lesesicherheit gewährleistet ist.

Die Lösung dieser Aufgabe ergibt sich, ausgehend von einem Verfahren der eingangs genannten Art, durch die Merkmale des Anspruchs 1.

Eine vorteilhafte Schaltungsanordnung zur Durchführung des erfindungsgemäßen Verfahrens ist im Anspruch 2 angegeben.

Im folgenden wird ein Ausführungsbeispiel der Erfindung anhand der Zeichnung näher erläutert. Dabei zeigen
- FIG 1: ein schrägstehendes Zeichen innerhalb einer in Zeilen und Spalten unterteilten Bildmustermatrix mit zugehörigem Zeichenschatten
- FIG 2: das unter einem Schräglagenwinkel ausgelesene Bildmuster des Zeichens gemäß FIG 1 mit entsprechend verkürztem Zeichenschatten
- FIG 3: eine erfindungsgemäße Schaltungsanordnung zur Aufbereitung schrägstehender Zeichen.

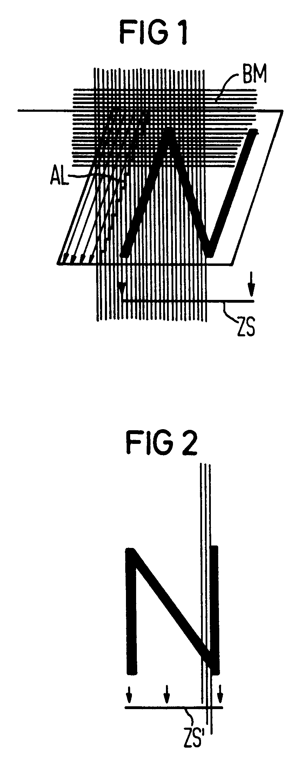

Die FIG 1 zeigt das für den Buchstaben in einer in Zeilen und Spalten unterteilten Bildmustermatrix BM gespeicherte binäre Bitmuster und den auf die Grundlinie projizierten Zeichenschatten ZS, wenn das Bitmuster wie üblich spaltenweise aus dem Bildsignalspeicher ausgelesen wird. Da ein schrägstehendes Zeichen erfahrungsgemäß von einem Klassifikator schwerer, unter Umständen gar nicht erkannt werden kann, wird eine Schräglagenkorrektur durchgeführt, indem das Zeichen unter verschiedenen Winkeln geschert wird. Wird der Zeichenschatten nach Abtastung unter einem ersten Scherungswinkel kleiner, führt dies zu einer entsprechenden Aufrichtung des Zeichens. Im umgekehrten Fall, das heißt bei größerwerdenden oder gleichbleibendem Zeichenschatten wurde das Zeichen in falscher Richtung geschert. Hier muß dann das Zeichen unter einem Winkel mit umgekehrten Vorzeichen erneut geschert werden, wobei auch hier festgestellt wird, ob der Zeichenschatten kleiner geworden ist. Dieses Verfahren wird solange fortgesetzt, bis sich der kleinstmögliche Zeichenschatten einstellt. Das bei dem kleinsten Zeichenschatten ausgelesene Bitmuster wird schließlich dem Klassifikator zur entsprechenden Klassifizierung angeboten.

Die FIG 1 zeigt, symbolisiert durch die Abtastlinie AL, eine Auslesung der Bildmustermatrix BM unter dem Scherungswinkel. Das Ergebnis dieses Abtastvorgangs ist in FIG 2 dargestellt und zeigt ein senkrecht stehendes Zeichen N, dessen Zeichenschatten ZS′ im Vergleich zur FIG 1 entsprechend kürzer ist. Das Zeichen gemäß FIG 2 weist damit den kürzestmöglichen Zeischenschatten auf.

Neben der Aufbereitung schrägstehender Einzelzeichen dient das beschriebene Verfahren auch zur Zeichentrennung, wenn sich bei der senkrechten Projektion zweier benachbarter Zeichen keine Weißzone ergibt und der Zeichenschatten zum Beispiel die Breite von zwei Zeichen erreicht. Auch in diesem Fall werden die Bitmuster der einzelnen Zeichen unter verschiedenen Winkeln bis maximal ± 45° aus dem Bildsignalspeicher ausgelesen, bis sich zwischen zwei Zeichen, vorausgesetzt, daß diese Zeichen nicht miteinander verbunden sind, eine Weißspalte ergibt. In diesem Fall wird dem Klassifikator das unter demjenigen Winkel abgetastete Zeichen angeboten, unter dem es sich von anderen Zeichen trennen läßt. Das unter diesem Trennungswinkel abgetasete Zeichen steht im allgemeinen auch senkrecht, so daß der Klassifkator dieses Zeichen auch leichter erkennen kann.

Bei Kursivschriften wird die Schräglage von mehreren Zeichen ermittelt. Da es sich um Maschinenschrift handelt, ist die Zeichenschräglage bei allen Zeichen gleich. Es genügt daher, für das jeweils erste Zeichen die optimale Zeichenschräglage zu ermitteln, unter der dann auch die folgenden Zeichen ausgelesen werden können.

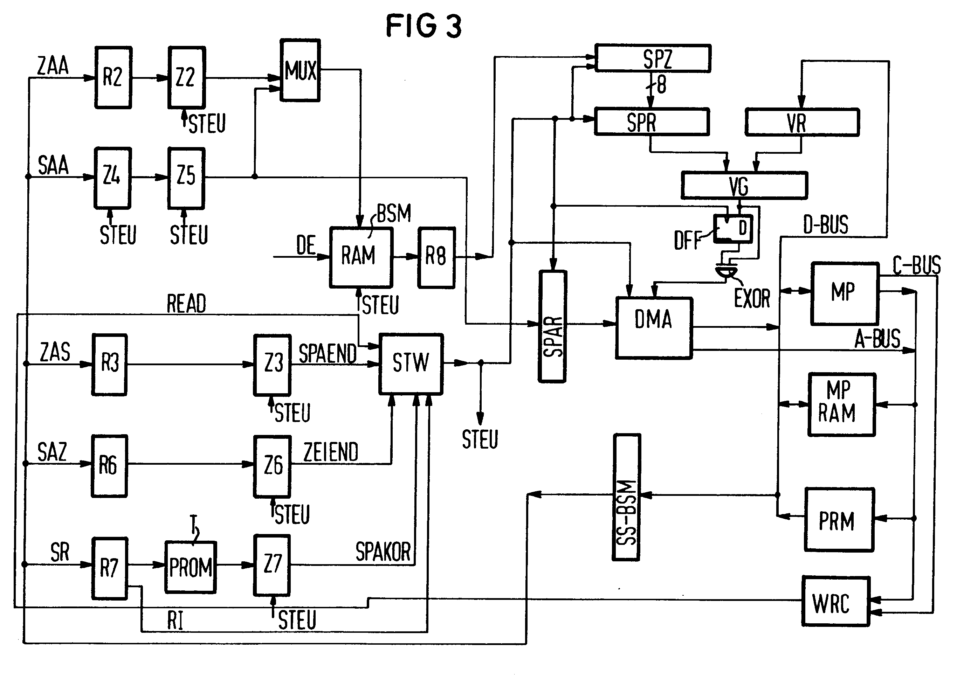

Die FIG 3 zeigt die für die Durchführung des erfindungsgemäßen Verfahrens vorgesehene Schaltungsanordnung. Diese Schaltungsanordnung beinhaltet ein Steuer-Prozessorsystem, bestehend aus Mikroprozessor MP, Arbeitsspeicher MP-RAM und Programmspeicher PRM, denen je ein gemeinsamer Daten- und Adreßbus D-BUS, A-BUS zugeordnet ist. Ferner ist eine aus einem programmierbaren Festwertspeicher bestehende Schreib-Lesebefehlssteuerung WRC vorgesehen, die mit dem Adreßbus A-BUS und dem Steuerbus C-BUS des Steuer-Prozessorsystems verbunden ist. Über eine Bildspeicher-Schnittstelle SS-BSM, gebildet aus BUS-Treiber und Tranceiver, werden mehrere Eingangsparameter an eine Auslese-Hardware des das jeweils aktuelle Zeichen in Binärform (Schwarzpunkt/Weißpunkt-Muster) enthaltenden Bildsignalspeichers BSM übertragen. Dieser in Spalten und Zeilen unterteilte, aus mehreren RAM-Bausteinen zusammengesetzte Bildsignalspeicher BSM mit dem Dateneingang DE ist entsprechend dem X/Y-Koordinatensystem adressierbar und wird zunächst in üblicher Weise spaltenweise ausgelesen. Anhand der ausgelesenen Information wird außerdem der auf die Zeichengrundlinie projizierte Zeichenschatten des original abgebildeten Zeichens gebildet. Als nächstes erfolgt eine erste Schrägauslesung unter einem ersten Scherungswinkel. Das auszulesende Zeichenfeld ist dabei definiert durch die Anfangs-Adreß-Koordinanten des linken, oberen Eckpunktes, ferner durch die Zeilenanzahl pro Spalte und durch die Spaltenanzahl. Die Schräge mit Richtungsangabe (positiv oder negativ) gibt die vermutete Kursivlage des Zeichens an. Sie wird durch eine Fünf-Bitkombination (4 Bit für die Schräge, 1 Bit für die Richtung) festgelegt, so daß sich insgesamt 16 verschiedene Scherungswinkel pro Richtung ergeben. Die für den Auslesevorgang notwendigen Eingangsparameter werden wie folgt abgespeichert:
- Zeilenanfangsadresse ZAA: in Register R2
- Spaltenanfangsadresse SAA: in Zähler Z4
- Zeilenanzahl pro Spalte ZAS: in Register R3
- Spaltenanzahl SAZ: in Register R6
- Zeichenschräge SR (pos.neg): in Register R7

Nach Übergabe eines Lese-Befehls READ vom Steuerprozessor an ein, durch einen programmierbaren Festwertspeicher gebildetes Steuerwerk STW wird der Auslesevorgang eingeleitet, wobei gesteuert durch das Steuersignal STEU, zunächst folgende Ladevorgänge ablaufen.
a) Inhalt von Register R2 in Zeilenadreßzähler Z2
b) Inhalt von Zähler Z4 in Spaltenadreßzähler Z5
c) Inhalt von Register R3 in Zeilenzähler Z3
d) Inhalt von Register R6 in Spaltenzähler Z6
e) Inhalt aus dem Speicher PROM (Teiler T) unter der Adresse des Inhalts (Schräge, 4 Bit) von Register R7 in Spaltenkorrekturzähler Z7, sowie des Inhalts RI (Richtung pos/neg. 1 Bit) von Register R7 in Steuerwerk STW.

Nach dem Laden der Eingangsparamter beginnt der eigentliche Auslesevorgang. Er erfolgt in Spaltenrichtung. Für jeden Lesezyklus wird über den Multiplexer MUX nacheinander die Spaltenadresse aus Spaltenadreßzähler Z5 und die Zeilenadresse aus Zeilenadreßzähler Z2 angelegt. Jeder Lesezyklus stellt am Ausgang des dem Bildsignalspeicher BSM nachgeschalteten Registers R8 ein Datenbit zur Verfügung, welches vom Steuer-Prozessor übernommen wird. Nach jedem Lesezyklus werden der Zähler Z2 inkrementiert und die Zähler Z3 und Z7 dekrementiert.

Nach jeweils T Datenbits erfolgt eine Korrektur des Spaltenadreßzählers Z5, wobei die gewünschte Schräg-Auslesung erreicht wird. T ist der im Spaltenkorrekturzähler Z7 geladene Parameter, der die Größe des jeweiligen Scherungswinkels, unter welchem das Zeichen ausgelesen werden soll, angibt. Die Korrektur des Spaltenadreßzählers Z5 wird durch den Zählerüberlauf SPAKOR über das Steuerwerk STW bewirkt, in dem bei positiver Schräge der Spaltenzähler Z5 inkrementiert und bei negativer Schräge dekrementiert wird. Es ergibt sich dadurch ein trapezähnlicher Auslesevorgang, wie er am Beispiel der Abtastlinie AL in FIG 1 für negative Schräge dargestellt ist. Am Spaltenende wird durch den Zählerüberlauf SPAEND des Zeilenzählers Z3 die Spaltenadresse im Zähler Z4 inkrementiert und der Spaltenzähler Z6 dekrementiert. Das Spaltenende wird erreicht, wenn die ausgelesenen Datenbits pro Spalte der Zeilenanzahl pro Spalte, das heißt dem im Zeilenzähler Z3 geladenen Betrag entsprechen.

Bevor eine neue Trapezspalte ausgewiesen wird, werden die Ladevorgänge a), b) c) und e) wiederholt mit der Maßgabe, daß der Spaltenadreßzähler Z5 mit der neuen Spaltenadresse aus dem Zähler Z4 geladen wird. Das Ende des Auslesevorgangs für das definierte Zeichenfeld ist gekennzeichnet durch den Zählerüberlauf ZEIEND des Spaltenzählers Z6.

Die binarisierten Zeichendaten werden aus dem Bildsignalspeicher BSM spaltenweise ausgelesen und an den Eingang eines Schwarzpunktzählers SPZ geführt, der nur bei einer Schwarzinformation hochgezählt wird. Am Spaltenende wird der Zählerstand dieses Schwarzpunktzählers SPZ in ein nachfolgendes Schwarzpunktregister SPR übernommen. Gleichzeitig wird die Spaltenadresse aus dem Spaltenadreßzähler Z5 des Bildsignalspeichers BSM in ein Spaltenadreßregister SPAR übernommen.

Ein von einem Mikroprozessor MP bereitgestellter Vergleichswert wird in ein Vergleichsregister VR eingeschrieben. Der Inhalt des Schwarzpunktregisters SPR wird nun in einem Vergleicher VG mit dem Inhalt des Vergleichsregister VR verglichen. Bei einem gegenüber dem Schwarzpunktregister SPR kleineren Wert im Vergleichsregister VR ergibt sich für das Ausgangssignal des Vergleichers VG der Wert 1, ist dagegen der Wert im Vergleichsregister VR größer oder gleich, dann ergibt sich für das Ausgangssignal am Vergleicher VG der Wert Null. Das Ausgangssignal des Vergleichers VG wird an ein D-Flipflop D-FF gelegt, dessen Ausgang mit dem Ausgangssignal des Vergleichers VG über eine EXKLUSIV-ODER-Schaltung EX-OR verknüpft wird. Besteht zwischen Ausgang des Vergleichers VG und Ausgang des D-Flipflops D-FF Ungleichheit, liefert die EXKLUSIV-ODER-Schaltung EX-OR am Ausgang den Wert 1 an eine nachfolgende DMA-Steuerung DMA. Die im Spaltenadreßregister SPAR bereitgestellte Spaltenadresse des Bildsignalspeichers BSM wird also nur dann per DMA-Steuerung DMA in den Arbeitsspeicher MP-RAM des Mikroprozessors MP übertragen, wenn am Vergleicher VG eine Änderung des Signals auftritt, das heißt, wenn der Wert von 0 nach 1 oder von 1 nach 0 übergeht. Damit werden jeweils die Segmentgrenzen in den Mikroprocessor MP übertragen, der dann die Auswertung des Zeichenschattens vornimmt.

### Bezugszeichenliste

- BM: = Bildmustermatrix
- ZS,ZS′: = Zeichenschatten
- AL: = Abtastlinie
- MP: = Mikroprozessor
- MP-RAM: = Arbeitsspeicher
- PRM: = Programmspeicher
- D-BUS: = Datenbus
- A-BUS: = Adreßbus
- C-BUS: = Steuerbus - Kontrollbus
- WRC: = Schreib-Lesebefehlssteuerung
- SS-BSM: = Bildspeicherschnittstelle
- BSM: = Bildsignalspeicher
- DE: = Dateneingang
- ZAA: = Zeilenanfangsadresse
- SAA: = Spaltenanfangsadresse
- ZAS: = Zeilenanzahl pro Spalte
- SAZ: = Spaltenanzahl
- SR: = Zeichenschräge (pos-neg)
- READ: = Lese-Befehl
- STEU: = Steuersignal
- STW: = Steuerwerk
- R2,R3,R6,R7,R8: = Register
- Z2: = Zeilenadreßzähler
- Z3: = Zeilenzähler
- Z4: = Zähler für Spaltenanfangsadresse
- Z5: = Spaltenadreßzähler
- Z6: = Spaltenzähler
- Z7: = Spaltenkorrekturzähler
- PROM: = Speicher mit Teiler T für Spaltenkorrektur
- MUX: = Multiplexer
- SPAKOR: = Zählerüberlauf von Zähler Z7
- SPAEND: = Zählerüberlauf von Zähler Z3
- ZEIEND: = Zählerüberlauf von Zähler Z6
- SPZ: = Schwarzpunktzähler
- SPR: = Schwarzpunktregister
- SPAR: = Spaltenadreßregister
- VR: = Vergleichsregister
- VG: = Vergleicher-Komparator
- DFF: = D-Flipflop
- EXOR: = Exklusiv-Oder-Glied
- MDA: = Direkt-Speicherzugriffssteuerung

(Logic: 74LS00, 08, 04, 10, 20, 74LS109A)

## Patentansprüche

1. Verfahren zur Aufbereitung von schrägstehenden, insbesondere handgeschriebenen Zeichen, bei dem die mittels einer optoelektrischen Fotodiodenmatrix abgetasteten Signale in Binärsignale umgewandelt und in einem in Spalten und Zeilen unterteilten bildsignalspeicher abgespeichert werden, bei dem der im X/Y-Koordinatensystem adressierbare Bildsignalspeicher spaltenweise ausgelesen wird und durch Projektion der aufeinanderfolgenden, jeweils Schwarzpunkte aufweisenden Spalten auf die Zeichengrundlinie ein erster Zeichenschatten gebildet wird, bei dem wenigstens ein zweiter Auslesevorgang mit einer schräg zur Y-Achse liegenden Abtastschar durchgeführt wird derart, daß der bei einer Startadresse beginnende spaltenweise Auslesevorgang innerhalb jeder Spalte nach einer jeweils vorgegebenen Zeilenzahl einen Sprung in die jeweils benachbarte Spalte bewirkt, bei dem der aus dem Ergebnis des zweiten Auslesevorgangs gebildete zweite Zeichenschatten mit dem ersten Zeichenschatten verglichen wird, bei dem im Falle eines vergleichsweise größeren zweiten Zeichenschattens ein dritter Auslesevorgang mit umgekehrter Schrägneigung der Abtastschar und bei einem vergleichsweise kleineren Zeichenschatten nach dem zweiten oder dritten Lesevorgang wenigstens ein weiterer Auslesevorgang unter einem größeren Abtastwinkel durchgeführt wird, bis sich im Vergleich mit dem zuletzt ermittelten Zeichenschatten wieder ein größerer oder wenigstens gleichgroßer Zeichenschatten ergibt und bei dem das dem jeweils kleinsten Zeichenschatten zugeordnete Leseergebnis zur weiteren Auswertung des Zeichens ausgewählt wird.

2. Schaltungsanordnung zur Durchführung des Verfahrens nach Anspruch 1, **gekennzeichnet** durch einen Bildsignalspeicher (BSM), dessen Adreßeingang über einen Multiplexer (MUX) einerseits mit einem Zeilenadreßzähler (Z2) für die Zeilenanfangsadresse und andererseits mit einem Spaltenadreßzähler (Z5) für die Spaltenadresse verbunden ist, durch ein Steuerwerk (STW), das eingangsseitig mit einem Zeilenzähler (Z3), einem Spaltezähler (Z6), einem Register (R7) zur Speicherung der Schräglagenrichtung und einem Spaltenkontrollzähler (Z7) sowie mit einer Schreib-Lese-Befehlssteuerung (WRC) verbunden ist, durch einen Schwarzpunktzähler (SPZ), der mit einem Ausgangsregister (R8) verbunden ist, durch einen dem Schwarzpunktzähler (SPZ) nachgeschalteten Schwarzpunktregister (SPR), durch einen Vergleicher (VG) dessen erster Eingang mit dem Ausgang des Schwarzpunktregisters (SPR) und dessen zweiter Eingang mit dem Ausgang eines Vergleichsregistes (VR) verbunden ist, durch eine dem Vergleicher (VG) nachgeschaltete, vom Spaltenende gesteuerte Kippstufe (D-FF), deren Ausgang mit dem Ausgang des Vergleichers (VG) über eine EXKLUSIV-ODER-Schaltung (EX-OR) verknüpft ist, welche ausgangsseitig mit einer direkten Speicherzugriffsteuerung (DMA) eines den Bildsignalspeicher (BSM) und das Steuerwerk (STW) steuernden Mikrocomputersystems (MP, MP-RAM, PRM) verbunden ist.

## Claims

1. Method for editing slanting, especially hand-written characters, in which the signals scanned by means of an optoelectric photodiode matrix are converted into binary signals and are stored in an image signal memory subdivided into columns and rows, in which method the image signal memory which is addressable in the X/Y coordinate system, is read out column by column and a first character shadow is formed by projection of the successive columns, in each instance exhibiting black points, onto the character base line, in which method at least one second readout event is conducted with a scan family lying obliquely in relation to the Y axis, in such a manner that the column by column readout event beginning at a start address effects a skip into the respectively neighbouring column, within each column, after a respective predetermined number of rows, in which method the second character shadow formed from the result of the second readout event is compared with the first character shadow, in which method, in the case of a comparatively larger second character shadow, a third readout event is conducted with reversed slanting attitude of the scan family and in the case of a comparatively smaller character shadow after the second or third read event at least one further readout event is conducted at a larger scan angle, until a larger or at least equally large character shadow is again produced in comparison with the last determined character shadow, and in which method the read result associated with the respectively smallest character shadow is selected for the further evaluation of the character.

2. Circuit arrangement for carrying out the method according to Claim 1, characterized by an image signal memory (BSM), the address input of which is connected via a multiplexer (MUX) on the one hand to a row address counter (Z2) for the row start address and on the other hand to a column address counter (Z5) for the column address, by a control unit (STW), which is connected on the input side to a row counter (Z3), a column counter (Z6), a register (R7) for the storage of the slant attitude direction and a column monitor counter (Z7) as well as to a write-read instruction control (WRC), by a black point counter (SPZ), which is connected to an output register (R8), by a black point register (SPR) connected downstream of the black point counter (SPZ), by a comparator (VG), the first input of which is connected to the output of the black point register (SPR) and the second input of which is connected to the output of a comparison register (VR), by a flip-flop (D-FF), which is connected downstream of the comparator (VG) and which is controlled by the column end and the output of which is connected to the output of the comparator (VG) via an EXCLUSIVE-OR gate (EX-OR), which is connected on the output side to a direct memory access control (DMA) of a microcomputer system (MP, MP-RAM, PRM) controlling the image signal memory (BSM) and the control unit (STW).

## Revendications

1. Procédé pour préparer des caractères obliques, notamment manuscrits, selon lequel les signaux explorés au moyen d'une matrice optoélectrique de photodiodes sont convertis en des signaux binaires et sont mémorisés dans une mémoire de signaux d'image, qui est subdivisée en colonnes et en lignes, et selon lequel la mémoire de signaux d'image, qui est adressable dans le système de coordonnées X/Y est lue colonne par colonne, et une première silhouette de caractère est formée par projection des colonnes successives, qui contiennent respectivement des points noirs, sur la ligne de base du caractère, et selon lequel au moins une seconde opération de lecture est exécutée avec un ensemble d'échantillonnage disposé obliquement par rapport à l'axe Y, de telle sorte que l'opération de lecture colonne par colonne, qui commence à une adresse de départ, exécute, à l'intérieur de chaque colonne, au bout d'un nombre de lignes respectivement prédéterminées, un saut à la colonne respectivement voisine, et selon lequel la seconde silhouette de caractère, formée à partir du résultat de la seconde opération de lecture, est comparée à la première silhouette de caractère, et selon lequel, dans le cas d'une seconde silhouette de caractère comparativement plus grande, une troisième opération de lecture est exécutée avec une inclinaison inversée de l'ensemble d'échantillonnage, et dans le cas d'une silhouette de caractère comparativement plus petite, après la seconde ou la troisième opération de lecture, au moins une autre opération de lecture est exécutée sous un angle d'échantillonnage plus grand jusqu'à ce que l'on obtienne à nouveau une silhouette de caractère d'une taille supérieure ou égale à celle de la silhouette de caractère déterminée en dernier lieu, et selon lequel le résultat de la lecture, qui est associé à la silhouette de caractère respective la plus petite, est sélectionné pour la poursuite de l'évaluation du caractère.

2. Montage pour la mise en oeuvre du procédé suivant la revendication 1, caractérisé par une mémoire de signaux d'image (BSM), dont l'entrée d'adresses est reliée, par l'intermédiaire d'un multiplexeur (MUX), d'une part, à un compteur d'adresses de lignes (Z2) pour l'adresse initiale de ligne, et, d'autre part, à un compteur d'adresses de colonnes (Z5) pour l'adresse de colonne, par une unité de commande (STW) , qui est reliée côté entrée à un compteur de lignes (Z3), à un compteur de colonne (Z6), à un registre (R7) servant à mémoriser la direction de position oblique et à un compteur de contrôle de colonnes (27), ainsi qu'à une unité (WRC) de commande d'instructions d'enregistrement-lecture, et par un compteur de points noirs (SPZ), qui est relié à un registre de sortie (R8), par un registre de points noirs (SPR), qui est branché en aval du compteur de points noirs (SPZ), par un comparateur (VG), dont la première entrée est reliée à la sortie du registre de points noirs (SPR) et dont la seconde entrée est reliée à la sortie d'un registre de comparaison (VR), par un étage à bascule (D-FF), qui est branché en aval du comparateur (VG), est commandé par l'extrémité des colonnes et dont la sortie est connectée à la sortie du comparateur (VG) par l'intermédiaire d'un circuit OU-EXCLUSIF (EX-OR) qui, côté sortie, est relié à une unité de commande d'accès direct en mémoire (DMA) d'un système à micro-ordinateur (MP, MP-RAM, PRM) qui commande la mémoire de signaux d'image (BSM) et l'unité de commande (STW).
